# DEMANDE DE BREVET EUROPEEN

(11) **EP 1 692 983 A1**
(43) Date de publication de la demande: **23.08.2006**
(21) Numéro de dépôt: 06290230.9
(22) Date de dépôt: 09.02.2006
(51) Int. Cl.: A47F 7/00, A47G 7/02, A01G 5/00, A01G 9/02, A47F 7/28

(54) **Pot pour présentoir à support par cadres**

(30) Priorité: 16.02.2005 FR 0501572
(71) Demandeur: Larbaletier S.A.S.U., 10280 Fontaine les Grès (FR)
(72) Inventeur: Larbaletier, Robert, 10280 Fontaine Les Gres (FR)
(74) Mandataire: Debay, Yves

(57) **Abrégé**

L'invention concerne un pot (3) pour présentoir comprenant au moins un cadre (4,5) de support caractérisé en ce qu'il comporte un rebord (34) d'épaisseur déterminée comprenant un premier bord (44,49) et un deuxième bord (40,45) opposé soit linéaire, parallèle et de longueur inférieure au premier bord soit en arrondi et en ce que une pluralité de pots sont positionnés dans le présentoir (1,2) en s'appuyant par leur rebord (34) sur au moins un cadre (4,5) de support.

Une particularité de l'invention est notamment que le premier bord est rectiligne ou de courbure orientée dans le même sens que le deuxième bord en arrondi.

Une autre particularité de l'invention est notamment que le rebord a deux bords latéraux rectilignes, parallèles entre eux et perpendiculaires au premier bord rectiligne.

## Description

La présente invention concerne le domaine des pots de présentation pour les fleurs ou les plantes. L'invention concerne plus particulièrement les pots venant s'insérer dans des supports à plusieurs niveaux avec une structure linéaire ou en coin.

Les présentoirs pour fleurs sont composés d'un support sur lequel sont placés des pots de section ronde et des pots de section rectangulaire. Des pots de section ronde sont utilisés dans des supports en coin, tandis que des pots de section ronde ou rectangulaire sont utilisés dans des supports linéaires. Les supports généralement à plusieurs niveaux sont réalisés par des étagères auxquelles sont ajoutés des rebords pour le maintien et l'habillage. Les supports linéaires ont des rebords droits formant un rectangle et les supports en coin ont par exemple des rebords en quart de cercle et des côtés latéraux formant ensembles un angle droit. Dans les présentoirs en coin, les fleurs sont présentées dans des pots de section ronde, selon un bord arrondi. Dans les présentoirs linéaires, les fleurs sont présentées dans des pots de section ronde ou respectivement des pots de section rectangulaire, selon un bord arrondi ou respectivement un bord droit.

Un problème structurel des présentoirs est que les présentoirs actuels ne permettent pas une présentation des fleurs sur un bord droit dans un présentoir en coin, le rangement devant être organisé sans perdre trop d'espace dans le présentoir d'un point de vue pratique et esthétique. Dans les présentoirs linéaires l'utilisation de pots ronds implique une perte d'espace de rangement, bien que les pots ronds soient préférés afin de présenter les fleurs selon un bord rond. Dans les présentoirs en coin, en forme de « L » ou de forme non linéaire le rangement n'est pas non plus optimisé avec des pots de section ronde ou rectangulaire.

La présente invention a donc pour objet de pallier un ou plusieurs des inconvénients de l'art antérieur en créant un ensemble permettant d'optimiser l'espace de rangement tout en ayant différentes possibilités de présentation en particulier pour réaliser une présentation des fleurs sur un bord droit pour un présentoir en coin, de gagner de l'espace utilisable pour les présentoirs linéaires ou en coin et de permettre une présentation sur un bord droit ou sur un bord arrondi en utilisant les mêmes pots pour les supports linéaires.

Cet objectif est atteint grâce à un pot pour présentoir comprenant au moins un cadre de support caractérisé en ce qu'il comporte un rebord d'épaisseur déterminée comprenant un premier bord (44, 49) et un deuxième bord (40, 45) opposé soit linéaire, parallèle et de longueur inférieure au premier bord soit en arrondi et en ce que une pluralité de pots sont positionnés dans le présentoir en s'appuyant par leur rebord (34) sur au moins un cadre de support.

Selon une autre particularité le premier bord est rectiligne.

Selon une autre particularité le premier bord est de courbure orientée dans le même sens que le deuxième bord en arrondi.

Selon une autre particularité, le rebord a deux bords latéraux rectilignes, parallèles entre eux et perpendiculaires au premier bord rectiligne

Selon une autre particularité, les bords latéraux rectilignes d'une part sont liés chacun au premier bord rectiligne, via un bord arrondi de jonction et d'autre part se rejoignent via le deuxième bord, le deuxième bord étant quasiment en demi cercle et de diamètre égale à la distance entre les bords latéraux.

Selon une autre particularité, les bords latéraux rectilignes d'une part sont liés chacun au premier bord rectiligne, via un bord arrondi de jonction et d'autre part sont liés chacun au deuxième bord rectiligne, via un bord rectiligne.

Selon une autre particularité, la section du pot prise parallèlement au plan du rebord, est de forme identique au rebord et sa taille diminue linéairement du rebord jusqu'au fond du pot, le fond étant plat, de même forme que le rebord et de taille inférieure.

Selon une autre particularité, le pot vient se placer dans un présentoir en coin dont les côtés latéraux sont perpendiculaires entre eux et se rejoignent selon un axe, disposant de barres de support étant en quart de cercle ou étant une ligne brisée, fixées aux côtés latéraux, les cadres de support étant chacun fixé à une barre avant basse et une barre arrière haute.

Selon une autre particularité, les cadres de support du présentoir en coin sont de même forme que le rebord du pot, la partie arrondie de ces cadres étant vers l'axe, la face droite des cadres étant tangente à la barre de support avant, l'espace entre les arrondis étant réduit au minimum, les cadres étant placés à intervalles réguliers.

Selon une autre particularité, dans le présentoir en coin, la face avant rectiligne du cadre de support est constituée par la barre de support.

Selon une autre particularité, le pot vient se placer dans un présentoir linéaire comprenant plusieurs cadres de support, les cadres étant soit de même forme que le rebord, soit rectangulaires;

Selon une autre particularité, les cadres de support rectangulaires du présentoir linéaire sont de largeur et de profondeur identique à celle des pots et sont positionnés bord à bord.

Selon une autre particularité, les cadres de support rectangulaires du présentoir linéaire sont composés d'une barre rectiligne avant basse formant l'avant du cadre, d'une barre rectiligne arrière haute formant l'arrière du cadre et des barres rectilignes transversales formant les côtés du cadre, les barres avant et arrière étant fixées aux côtés latéraux;

Selon une autre particularité, au moins une des barres rectilignes transversales composant le côté d'un cadre rectangulaire constitue le côté du cadre voisin.

L'invention, avec ses caractéristiques et avantages, ressortira plus clairement à la lecture de la description faite en référence aux dessins annexés donnés à titre d'exemples non limitatifs dans lesquels :
- la figure 1 représente une vue en perspective d'un présentoir linéaire positionné à côté d'un présentoir en coin, un détail de la vue en perspective du présentoir en coin et une vue en perspective d'un pot seul selon l'invention ;
- la figure 2 représente une vue en perspective du support en coin sans les pots selon l'invention ;
- la figure 3 représente une vue en perspective d'un présentoir linéaire comprenant des pots selon l'invention ;
- la figure 4 représente une vue en perspective du support linéaire sans les pots selon l'invention ;
- les figures 5 à 8 représentent respectivement une vue de dessus, une vue de côté et deux vues en perspective d'un type de pot pour présentoir à support par cadre selon l'invention ;
- les figures 9 à 12 représentent respectivement une vue de dessus, une vue de côté et deux vues en perspective d'un autre type de pot pour présentoir à support par cadre selon l'invention ;
- les figures 13 à 16 représentent respectivement une vue de dessus, une vue de côté et deux vues en perspective d'un autre type de pot pour présentoir à support par cadre selon l'invention ;
- les figures 17 à 20 représentent respectivement une vue de dessus, une vue de côté et deux vues en perspective d'un autre type de pot pour présentoir à support par cadre selon l'invention ;
- les figures 21 à 27 représentent chacune une vue de dessus d'un pot selon l'invention, selon les différentes réalisation.

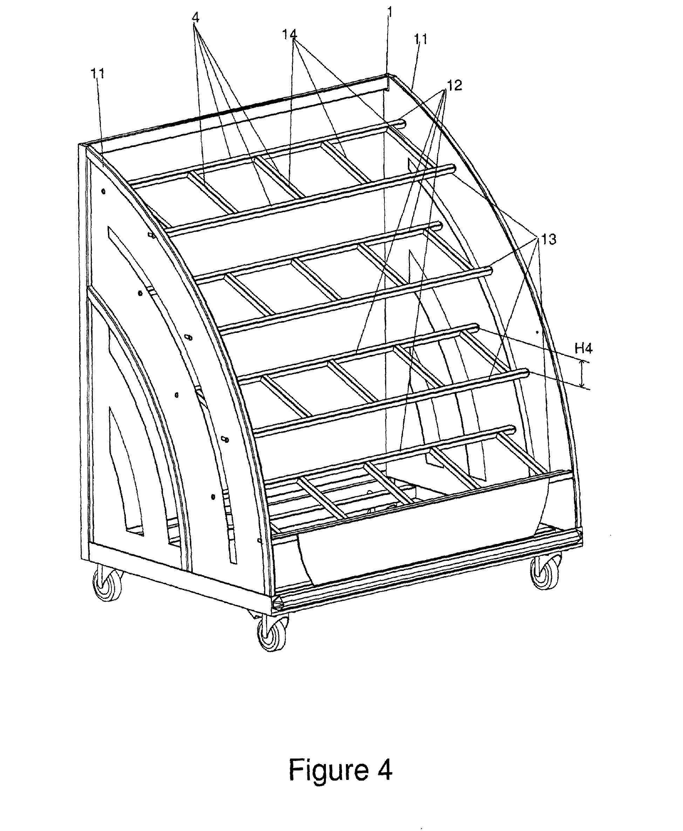

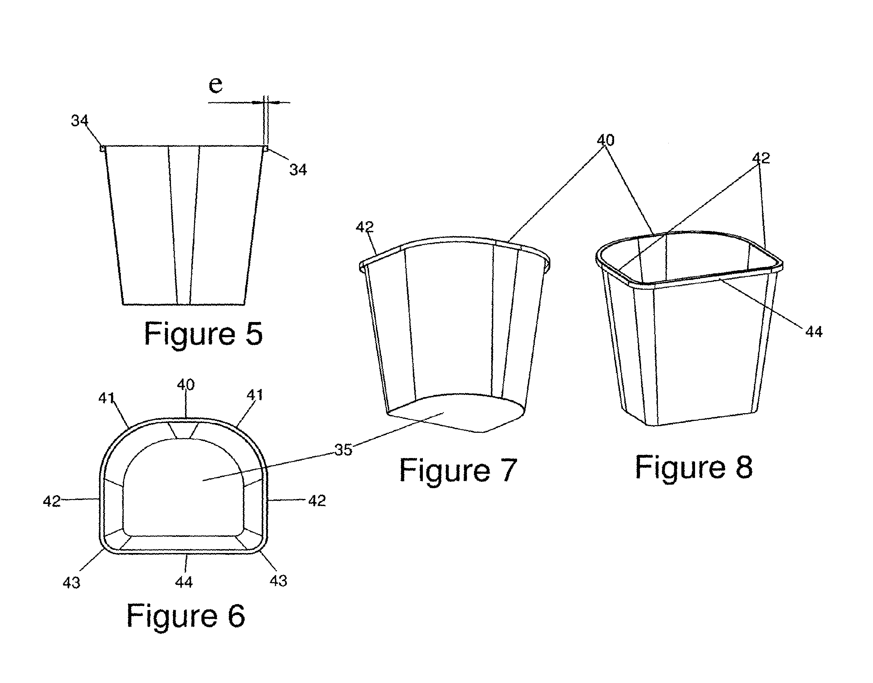

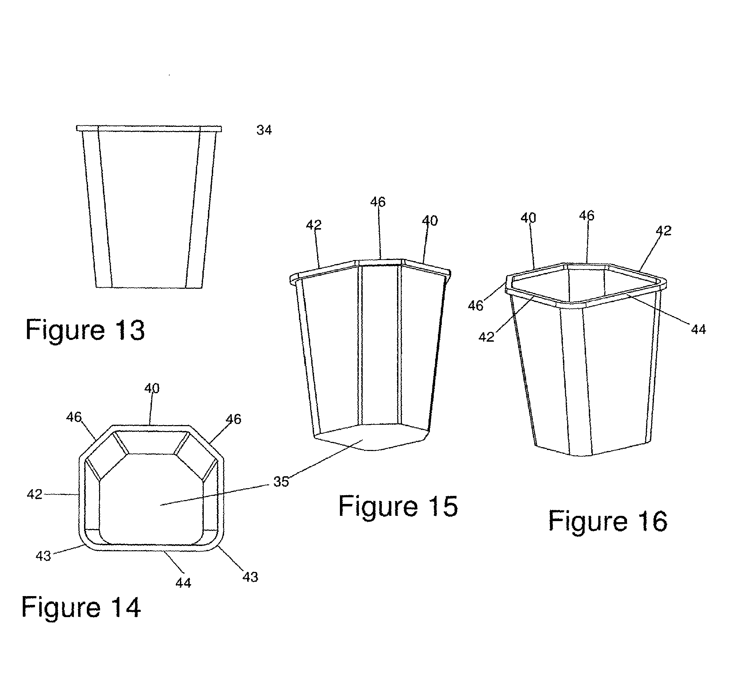

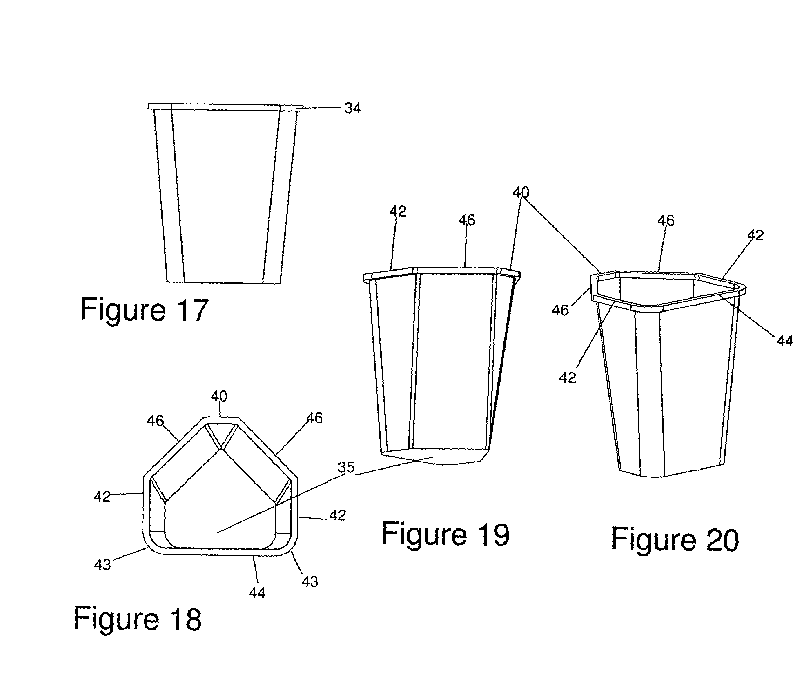

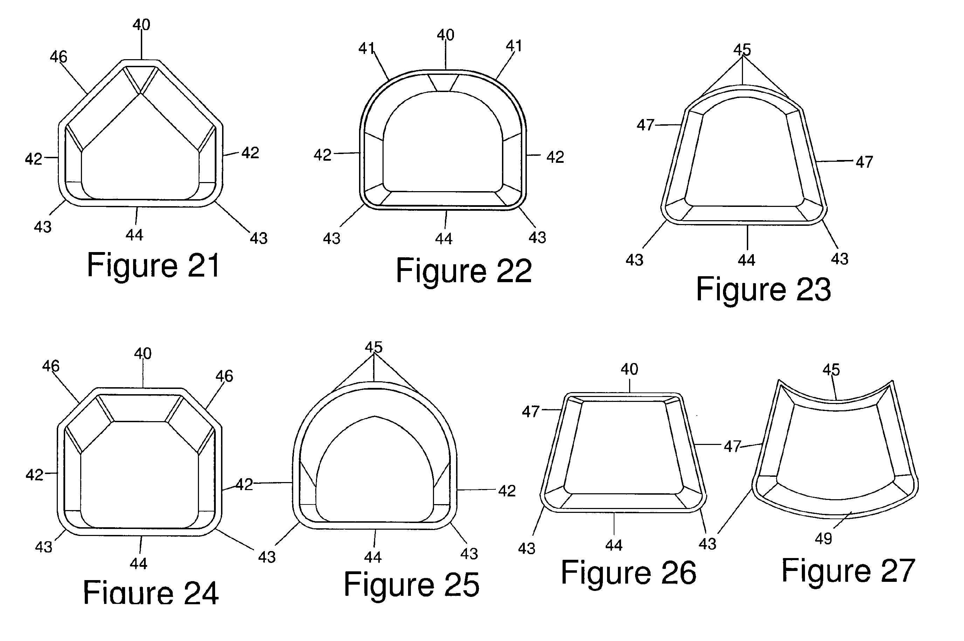

L'invention va être à présent être décrite en référence aux figures précédemment citées. Comme représenté aux figures 5, 9, 13 et 17, le pot (3) comporte un rebord (34) non négligeable servant de surface d'appui sur les cadres de support (4, figure 4 et 5, figure 2), Le rebord (34) à une épaisseur (e) déterminée. Le pot (3) peut être obtenu par exemple par extrusion. Les figures 21 à 26 représentent différents exemples de réalisation d'un pot selon l'invention, en vue de dessus. Différents profils vont maintenant être décrit.

Dans un mode de réalisation, comme représenté aux figures 21 et 24, le profil du rebord (34) en vue de dessus comporte un grand bord (44) droit, qui est de manière non limitative, le bord de présentation. Le grand bord (44) droit est lié à deux bords (42) latéraux parallèles entre eux et perpendiculaire au grand bord (44) droit, la liaison étant réalisée, par exemple, par un arrondi (43). De manière non limitative les bords (42) latéraux parallèles entre eux sont prolongés chacun par un bord (46) oblique, les deux bords (46) obliques se rejoignant par un petit bord (40) droit. Le petit bord (40) droit est de longueur inférieur au grand bord (44) et parallèle au grand bord (44) droit.

Dans un autre mode de réalisation, comme représenté à la figure 22, le profil du rebord (34) en vue de dessus comprend le grand bord (44) droit qui est lié aux deux bords (42) latéraux parallèles entre eux et perpendiculaires au grand bord (44) droit. La liaison entre le grand bord (44) droit les bords (42) latéraux est réalisée, par exemple, par l'arrondi (43). Les bords (42) latéraux parallèles entre eux se prolongent chacun par un arrondi (41), les arrondis (41) se rejoignant par le petit bord (40) de taille inférieure au grand bord (44) et parallèle au grand bord (44) droit.

Dans un autre mode de réalisation, comme représenté, comme représenté à la figure 25, le profil du rebord (34) en vue de dessus comprend le grand bord (44) droit qui est lié aux deux bords (42) latéraux parallèles entre eux et perpendiculaires au grand bord (44) droit. La liaison entre le grand bord (44) droit les bords (42) latéraux est réalisée, par exemple, par l'arrondi (43). Les deux bords (42) latéraux parallèles entre eux se rejoignent par un bord (45) arrondi quasiment en demi-cercle et de diamètre égal à la distance entre les deux bords (42) latéraux parallèles entre eux.

Dans un autre mode de réalisation, comme représenté aux figures 23 et 26, le profil en vue de dessus du pot comprend un grand bord (44) droit de présentation lié à deux bords (47) latéraux obliques, la liaison entre un bord (47) latéral oblique et le grand bord (44) droit étant réalisée par un arrondi (43). Les deux bords (47) latéraux obliques se rejoignent soit par un bord (45) arrondi, comme représenté à la figure 23, soit par un petit bord (40) droit parallèle et de taille inférieure au grand bord (44) droit, comme représenté à la figure 26.

Dans un autre mode de réalisation, comme représenté à la figures 27, le profil en vue de dessus du pot comprend un grand bord (49) arrondi de présentation lié à deux bords (47) latéraux obliques, la liaison entre un bord (47) latéral oblique et le grand bord (44) droit étant réalisée par un arrondi (43). Les deux bords (47) latéraux obliques se rejoignent par un bord (45) arrondi. De manière non limitative le grand bord (49) arrondi et le bord arrondi (45) opposé sont courbés vers le devant du présentoir et ont quasiment un même rayon de courbure, le grand bord (49) arrondi étant de longueur supérieure au bord (45) arrondi opposé. De manière non limitative, ce type de pot est associé à un présentoir en coin.

Le profil du rebord (34) en vue de dessus est de même forme que le profil du pot (3) en vue de dessus suivant différentes sections, les sections étant prises parallèlement à une surface supérieure définie par le rebord (34). Ainsi chacun des profils de pot selon l'invention permet différent agencement en relation avec le support. De manière non limitative, le pot (3) est à fond (35) plat et l'aire de la section du pot (3) de même forme que le rebord (34) diminue linéairement entre le rebord (34) et le fond (35). Le pot est ainsi évasé. La forme évasée du pot selon l'invention apparaît sur les figures 5, 9, 13 et 17, représentant un pot en vue de côté.

Sur la figure 4, le support linéaire avec ses deux côtés parallèles (11) est présenté sans les pots (3). Les cadres (4) rectangulaires sont fixés par une barre avant basse rectiligne (13) et une barre arrière haute rectiligne (12) aux côtés latéraux (11). Les cadres (4) rectangulaires sont composés par une barre avant (13), une barre arrière (12) et des barres transversales (14). La différence de hauteur H4 entre les barres (13 et 12) définit l'inclinaison des cadres (4)..

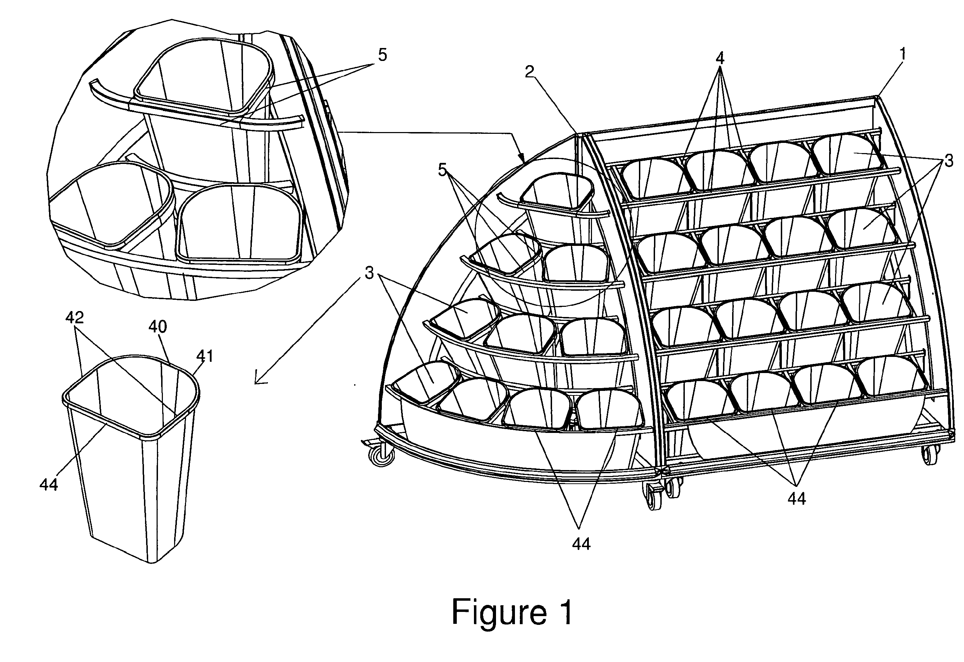

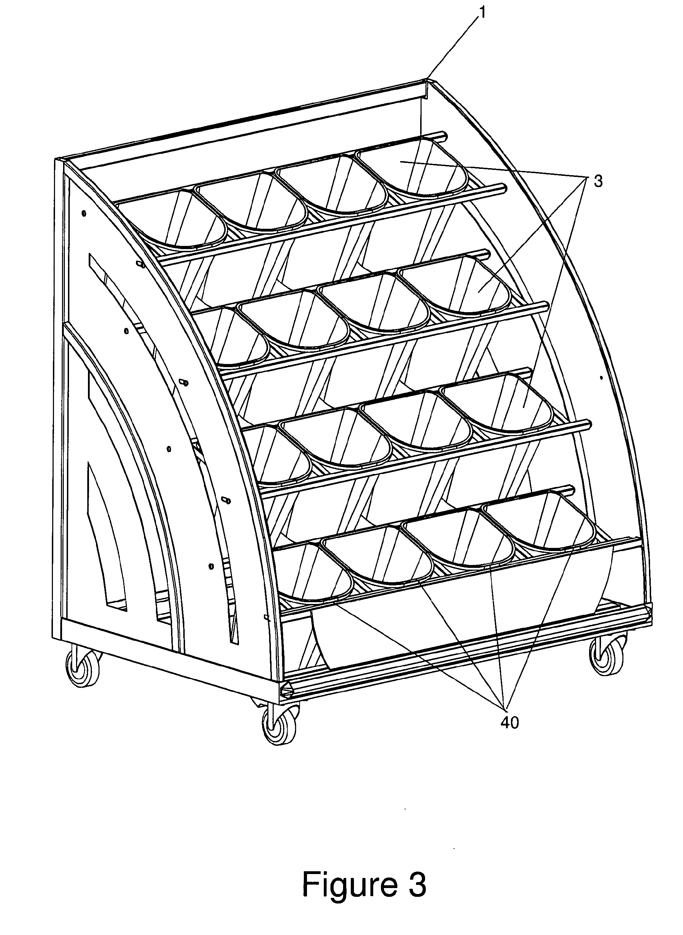

Dans un premier agencement, représenté dans la figure 1, les pots (3) sur le support linéaire (1) présentent le grand bord (44) droit en face avant. Le rebord (34) des pots (3) s'appuie sur un cadre (4) de support rectangulaire. La forme rectangulaire du cadre de support (4) permet de retourner les pots (3), face arrondie (40, 41) devant, selon un autre agencement, comme représenté à la figure 3. Ainsi dans les supports linéaires ayant un cadre (4) de support rectangulaire, la forme du pot selon l'invention permet plusieurs agencements. Lorsque le grand bord (44) droit est disposé vers l'arrière du support (1) linéaire, la présentation des fleurs est en arrondi (45 ; 41, 40) ou en biseau (40, 46). Le profil du pot (3) représenté aux figures 1, 3 et 5 à 8, permet une présentation en arrondi tout en optimisant l'espace de rangement. En comparaison, l'utilisation d'un seau rond implique une perte d'espace à l'arrière du présentoir. De plus les pots (3) placés côte à côte grâce au cadre de support (4) optimisent l'utilisation de l'espace puisque les bords (42) latéraux parallèles de deux pots (3) distincts se touchent quasiment.

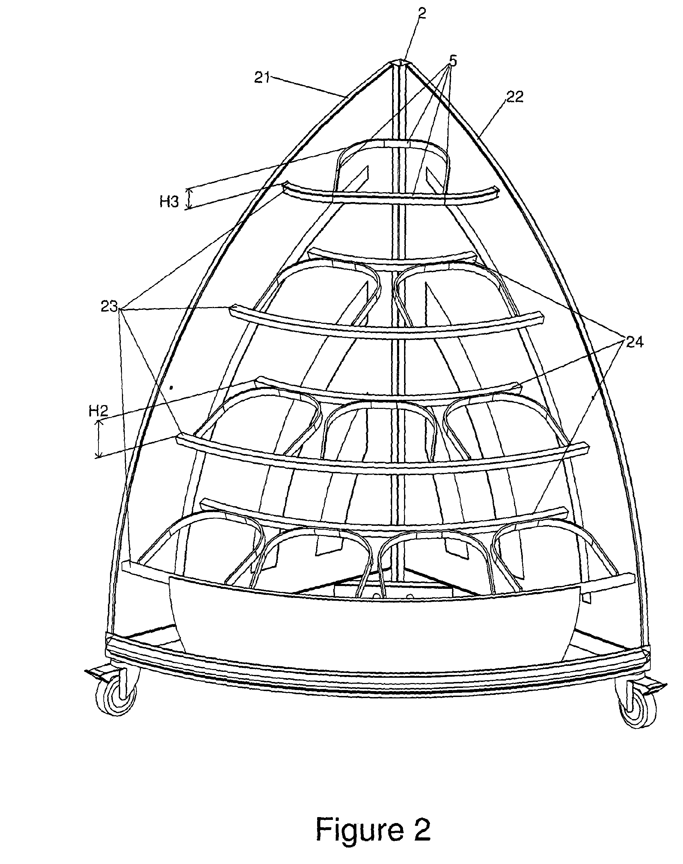

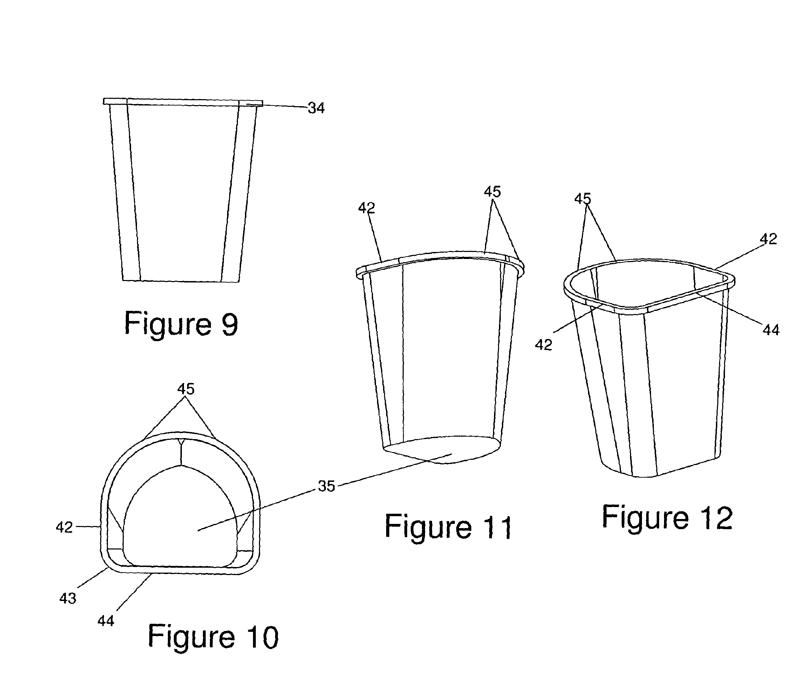

Comme représenté à la figure 2, le support en coin comprend deux côtés latéraux perpendiculaires entre eux (21 et 22), les pots n'étant pas représentés. Les supports en forme de "U" fermé (5) sont fixés aux côtés latéraux (21 et 22) par une barre avant basse en quart de rond (23) et une barre arrière haute en quart de rond (24). La différence de hauteur (H2) entre les barres (23 et 24) définit l'inclinaison du cadre (5). La barre (23) sert également d'appui au rebord (34) du pot (3). Le support en "U" fermé (5) situé en haut de la structure n'est pas associé à une barre arrière, mais se fixe directement sur les côtés latéraux (21 et 22). L'inclinaison est définie par la différence de hauteur (H3) entre la barre 23 et les points de fixation du cadre (5) sur les côtés (21 et 22). Le cadre (5) est adapté au type de pot (3) représenté à la figure 10. Les arrondis (43) entre le grand bord (44) droit et les bords latéraux (42) parallèles entre eux sont dus, de manière non limitative, au procédé de fabrication, mais les arrondis (41) jointif au petit bord (40) droit sont fonctionnels et ont donc un rayon de courbure plus important. Dans un second agencement, comme représenté par la figure 1, les pots (3) sont placés dans le support en coin (2) et présentent un bord droit (31) en face avant. Le rebord (34) des pots (3) s'appuie sur un cadre de support en forme de "U" fermé (5). La forme du cadre (5) étant quasiment la même que celle du rebord (34) et le pot (3) n'a qu'une position possible. Les pots (3) sont placés avec le bord droit (44) en face avant, dans le support en coin (2), grâce à la forme arrondie (40, 41 ;45) du profil du pot (3), sans laquelle les pots positionnés côte à côte se gêneraient. Les supports en forme de "U" fermé (5) sont donc montés tangents les uns aux autres. Sur le détail de la vue en perspective du présentoir en coin deux arrondis (41) de pots distincts sont proches afin d'optimiser l'espace de rangement. Dans un autre cas où les pots seraient à section rectangulaire l'espace entre chaque pot serait plus important et de l'espace de rangement serait perdu. La perte de place serait telle que l'agencement des pots dans un support en coin, présentant un bord de présentation droit, ne serait plus possible. Dans un autre exemple de réalisation, des pots ayant un profil tel que représenté à une des figures 21 et 23 à 26, sont associés à un cadre de même forme, le cadre étant lié à un présentoir, par exemple, en coin. Le profil des pots ayant leur bord large vers l'avant et leur bord rétréci ou arrondi ou biseauté vers l'arrière, permet d'optimiser l'agencement des pots (3) dans leur cadre de support.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Pot pour présentoir comprenant au moins un cadre (4, 5) de support
**caractérisé en ce qu'**il comporte un rebord (34) d'épaisseur (e) déterminée comprenant un premier bord (44, 49) et un deuxième bord (40, 45) opposé soit linéaire, parallèle et de longueur inférieure au premier bord soit en arrondi et **en ce que** une pluralité de pots sont positionnés dans le présentoir en s'appuyant par leur rebord (34) sur au moins un cadre de support.

2. Pot pour présentoir selon la revendication 1, **caractérisé en ce que** le premier bord (44) est rectiligne.

3. Pot pour présentoir selon la revendication 1, **caractérisé en ce que** le premier bord (49) est de courbure orientée dans le même sens que le deuxième bord (45) en arrondi.

4. Pot pour présentoir selon une des revendications 2 ou 3,
**caractérisé en ce que** le rebord (34) a deux bords latéraux rectilignes, parallèles entre eux et perpendiculaires au premier bord rectiligne

5. Pot pour présentoir selon la revendication 4, **caractérisé en ce que**, les bords (42) latéraux rectilignes d'une part sont liés chacun au premier bord (44) rectiligne, par un bord (43) arrondi de jonction et d'autre part se rejoignent via le deuxième bord (45), le deuxième bord étant quasiment en demi cercle et de diamètre égale à la distance entre les bords (42) latéraux.

6. Pot pour présentoir selon la revendication 4, **caractérisé en ce que**, les bords (42) latéraux rectilignes d'une part sont liés chacun au premier bord (44) rectiligne, par un bord (43) arrondi de jonction et d'autre part sont liés chacun au deuxième bord (40) rectiligne, via un bord (46) rectiligne.

7. Pot pour présentoir selon une des revendications 5 ou 6,
**caractérisé en ce que** la section du pot (3) prise parallèlement au plan du rebord (34), est de forme identique au rebord (34) et sa taille diminue linéairement du rebord jusqu'au fond (35) du pot (3), le fond (35) étant plat, de même forme que le rebord (34) et de taille inférieure..

8. Pot pour présentoir selon la revendication 7, **caractérisé en ce qu'**il vient se placer dans un présentoir en coin dont les côtés latéraux sont perpendiculaires entre eux et se rejoignent selon un axe, disposant de barres de support étant en quart de cercle ou étant une ligne brisée, fixées aux côtés latéraux, les cadres de support étant chacun fixé à une barre avant basse et une barre arrière haute.

9. Pot pour présentoir selon la revendication 8, **caractérisé en ce que** les cadres de support du présentoir en coin sont de même forme que le rebord (34) du pot, la partie arrondie de ces cadres étant vers l'axe, la face droite des cadres étant tangente à la barre de support avant, l'espace entre les arrondis étant réduit au minimum, les cadres étant placés à intervalles réguliers.

10. Pot pour présentoir selon la revendications 9, **caractérisé en ce que** dans le présentoir en coin, la face avant rectiligne du cadre de support est constituée par la barre de support.

11. Pot pour présentoir selon la revendication 7, **caractérisé en ce qu'**il vient se placer dans un présentoir linéaire comprenant plusieurs cadres de support, les cadres étant soit de même forme que le rebord, soit rectangulaires;

12. Pot pour présentoir selon la revendication 11 **caractérisé en ce que** les cadres de support rectangulaires du présentoir linéaire sont de largeur et de profondeur identique à celle des pots et sont positionnés bord à bord.

13. Pot pour présentoir à support par cadres selon la revendication 12,
**caractérisé en ce que** les cadres de support rectangulaires du présentoir linéaire sont composés d'une barre rectiligne avant basse formant l'avant du cadre, d'une barre rectiligne arrière haute formant l'arrière du cadre et des barres rectilignes transversales formant les côtés du cadre, les barres avant et arrière étant fixées aux côtés latéraux;

14. Pot pour présentoir selon la revendication 13, **caractérisé en ce que** au moins une des barres rectilignes transversales composant le côté d'un cadre rectangulaire constitue le côté du cadre voisin.
